# FASCICULE DE BREVET EUROPEEN

(11) **EP 0 694 452 B1**
(45) Date de publication et mention de la délivrance du brevet: **11.11.1998**
(21) Numéro de dépôt: 95111402.4
(22) Date de dépôt: 20.07.1995
(51) Int. Cl.: B60S 1/04

(54) **Dispositif modulaire pour le lavage et l'essuyage d'un pare-brise de véhicule**
Modulare Einrichtung zum Waschen und Wischen einer Fahrzeugscheibe
Modular drive for washing and wiping a vehicle windscreen

(30) Priorité: 26.07.1994 FR 9409335
(43) Date de publication de la demande: 31.01.1996
(73) Titulaire: VALEO SYSTEMES D'ESSUYAGE, 78321 La Verrière (FR)
(72) Inventeur: Berge, Gilles, F-78120 Rambouillet (FR); Roumegoux, Jean-Louis, F-75116 Paris (FR); Eustache, Jean-Pierre, F-92160 Antony (FR)
(74) Mandataire: Gamonal, Didier

(56) Documents cités:
- EP-A- 0 588 708
- DE-U- 9 310 678
- FR-A- 2 684 950
- INGENIEURS DE L'AUTOMOBILE, no. 682, GARCHES (FR), pages 42-45, XP 000381999 GIL, M. 'La fonction grille d'auvent'

## Description

La présente invention concerne un dispositif pour le lavage et l'essuyage d'un pare-brise de véhicule, notamment de véhicule automobile, comportant un capot situé en retrait du bord inférieur du pare-brise.

L'espace situé entre le capot et le bord inférieur du pare-brise sert habituellement au montage de moyens d'essuyage du pare-brise, ainsi qu'une admission d'air depuis l'extérieur vers l'intérieur du véhicule, munie en entrée d'une grille d'entrée d'air. Le véhicule comporte également des moyens pour le lavage du pare-brise, constitué d'un réservoir de liquide lave-glace et de moyens pour réaliser l'aspersion du pare-brise avec ce liquide.

Le réservoir de liquide lave-glace est habituellement disposé sous le capot, dans le compartiment avant du véhicule. Le montage sur les véhicules des moyens d'essuyage, de l'admission d'air, de la grille d'entrée d'air, du réservoir et des moyens pour réaliser l'aspersion du pare-brise sont des opérations qui requièrent un temps de main-d'oeuvre important car les opérations d'assemblage et de montage sont difficilement automatisable et elles sont donc particulièrement coûteuses.

On a proposé d'intégrer dans des dispositifs d'essuyage et de lavage monoblocs la grille d'entrée d'air, l'admission d'air, le réservoir de liquide lave-glace, les moyens d'essuyage et les moyens pour réaliser l'aspersion du pare-brise, de façon à simplifier l'opération de montage dans le véhicule et la rendre automatisable.

Il a été également déjà été proposé (par exemple dans la demande de brevet EP-A-0 588 708) un dispositif modulaire pour l'essuyage et le lavage pour le pare-brise d'un véhicule qui évite de faire appel à des dispositifs d'essuyage et de lavage monoblocs qui soient spécifiques à un véhicule donné et qui comporte, à cet effet, au moins un module commun utilisable sur différents types de véhicules, permettant ainsi de réduire les coûts de fabrication en bénéficiant d'économie d'échelle.

Plus particulièrement le dispositif modulaire est constitué d'au moins deux modules à assembler entre eux et au reste du véhicule, l'un des deux modules étant apte à contenir un liquide lave-glace en formant réservoir et l'autre module supportant des moyens d'essuyage du pare-brise.

De façon classique, on fixe le rétroviseur sur la structure mécanique du véhicule ; le document "Ingénieurs de l'automobile", n°682, GARCHES, page 45 enseigne notamment la fixation du rétroviseur sur une grille d'auvent , c'est-à-dire sur une poutre permettant l'alimentation en air de l'habitacle.

La présente invention a pour but de proposer un perfectionnement à la conception précité d'un dispositif modulaire de lavage et d'essuyage permettant d'en améliorer la modularité et d'amplifier les avantages résultant de sa facilité d'assemblage et de montage.

A cet effet, l'invention propose un dispositif modulaire ou le lavage et l'essuyage d'un pare-brise, du type mentionné précédemment, (EP-A-0 588 708) et défini dans le préambule de la revendication 1 caractérisé en ce que l'un modules sert de support a au moins un rétroviseur latéral. Divers modes de réalisation de l'invention sont précisés dans les revendications 2 à 5.

D'autre caractéristiques et avantages de l'invention apparaîtront à la lecture de la description détaillée qui va suivre pour la compréhension de laquelle on se reportera aux dessins annexés dans lesquels !:
- la figure 1 est une vue schématique en perspective illustrant un véhicule équipé d'un dispositif modulaire selon l'état de la technique ;
- la figure 2 est une vue de détail en perspective à la plus grande échelle illustrant une première variante du dispositif modulaire selon l'invention ;
- la figure 3 est une vue similaire à celle de la figure 2 illustrant une seconde variante du dispositif modulaire selon l'invention ;

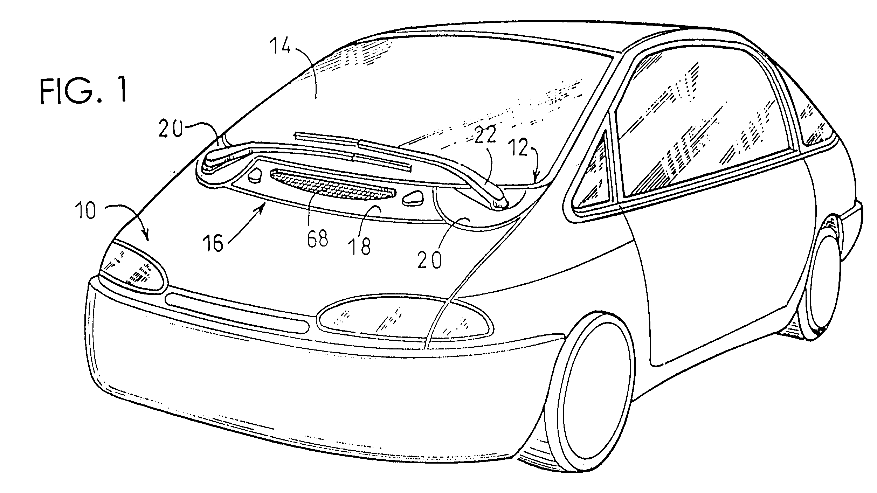

On a représentée sur la figure 1, de façon schématique et en perspective, un véhicule automobile comportant un capot 10 situé en retrait du bord inférieur 12 du pare-brise 14, équipé d'un dispositif modulaire 16 pour le lavage et l'essuyage du pare-brise 14 selon l'état de la technique.

Selon l'exemple de réalisation représenté, le dispositif modulaire 16 est constitué d'un module formant réservoir 18 et de deux modules d'essuyage 20.

Le module formant réservoir présente une face supérieure apparente généralement plane et située dans le prolongement de la surface externe du capot 10, s'étendant longitudinalement sur une partie de la largeur du véhicule de part et d'autre d'un plan de symétrie longitudinale pour la carrosserie du véhicule et latéralement entre le capot 10 et le bord inférieur 12 du pare-brise 14.

Les modules d'essuyage 20 présentent également une face supérieure apparente s'étendant généralement dans le prolongement de la surface externe du capot 10 et sont disposés de part et d'autre du module formant réservoir 18, qu'ils prolongent jusqu'aux côtés du véhicule en couvrant l'espace compris entre le capot 10 et le bord inférieur 12 du pare-brise 14.

Chaque module d'essuyage 20 porte un bras d'essuie-glace 22, connu en lui-même, muni à une extrémité de moyens de fixation sur un arbre d'entraînement couplé à des moyens d'entraînement en rotation de l'arbre et muni à l'autre extrémité d'un balai portant une raclette d'essuyage du pare-brise 14.

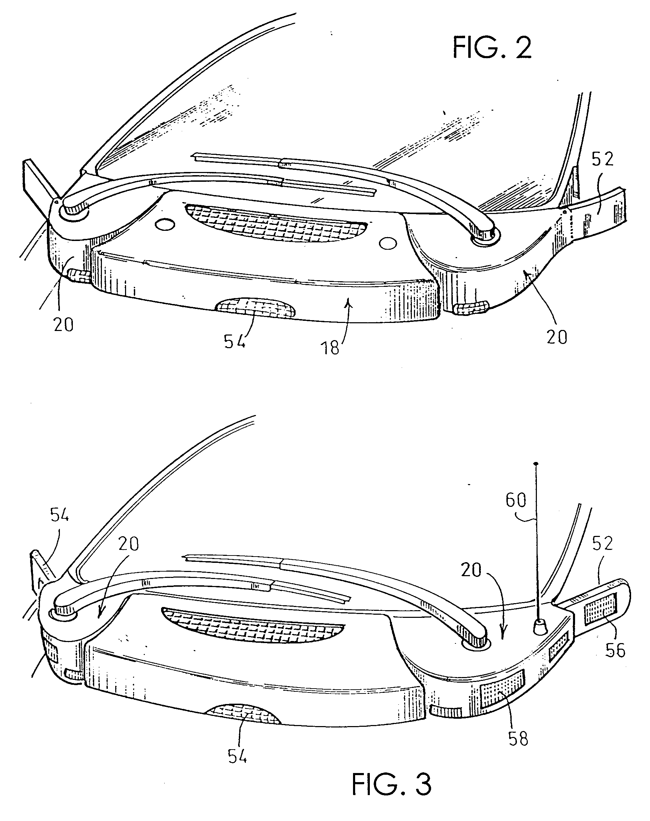

Dans le mode de réalisation selon l'invention illustré sur la figure 2, les modules d'essuyage 20 servent chacun de support à une coque 52 réalisée en une seule pièce par moulage pour un rétroviseur latéral du véhicule, cette pièce pouvant également être monobloc avec les modules 20.

Le module de lavage 18 peut également servir de support à une lampe 54 d'éclairage du compartiment moteur tandis que chacun des modules d'essuyage 20 peut comporter un clignotant 56.

Dans la variante de réalisation illustrée sur la figure 3, les rétroviseurs 52 sont montés de manière articulée, et éventuellement escamotable, sur les modules d'essuyage 20 et peuvent comporter eux-mêmes des clignotants 56 ou des témoins de renvoi des clignotants.

## Revendications

1. Dispositif modulaire pour le lavage et l'essuyage d'un pare-brise de véhicule comportant un capot (10) situé en retrait du bord inférieur (12) du pare-brise (14), du type constitué par au moins deux modules (18, 20) à assembler entre eux et au reste du véhicule, l'un des modules (18) étant apte à contenir un liquide lave-glace en formant réservoir et l'autre module (20) supportant des moyens d'essuyage du pare-brise, caractérisé en ce que l'un des modules sert de support à au moins un rétroviseur latéral (52).

2. Dispositif selon la revendication 1, caractérisé en ce que le rétroviseur latéral (52) est fixe.

3. Dispositif selon l'une des revendications 1 ou 2, caractérisé en ce que le rétroviseur latéral (52) est réalisé en une seule pièce avec le module (15, 20).

4. Dispositif selon la revendication 1, caractérisé en ce que le rétroviseur latéral (52) est articulé sur le module (18, 20).

5. Dispositif selon la revendication 4, caractérisé en ce que le rétroviseur latéral (52) est escamotable sur le module (18, 20).

## Claims

1. Modular apparatus for washing and wiping a windscreen of a vehicle having a bonnet (10) extending away from the lower edge (12) of the windscreen (14), being of the type consisting of at least two modules (18, 20) for assembly together and to the rest of the vehicle, one of the modules (18) being adapted to contain a screen washing liquid and constituting a reservoir, and the other module (20) supporting a means for wiping the windscreen, characterised in that one of the modules serves as a support for at least one wing mirror (52).

2. Apparatus according to Claim 1, characterised in that the wing mirror (52) is fixed.

3. Apparatus according to Claim 1 or Claim 2, characterised in that the wing mirror (52) is made in one piece with the module (15, 20).

4. Apparatus according to Claim 1, characterised in that the wing mirror (52) is articulated on a module (18, 20).

5. Apparatus according to Claim 4, characterised in that the wing mirror (52) is retractable on the module (18, 20).

## Patentansprüche

1. Modulare Einrichtung zum Waschen und Wischen der Windschutzscheibe eines Fahrzeugs, das eine Fronthaube (10) umfaßt, die von der Unterkante (12) der Windschutzscheibe (14) zurückversetzt angeordnet ist, bestehend aus mindestens zwei Modulen (18, 20), die miteinander und mit dem Rest des Fahrzeugs zu verbinden sind, wobei eines der beiden Module (18) eine Scheibenwaschflüssigkeit enthalten kann, indem es einen Behälter bildet, während das andere Modul (20) Wischmittel zum Wischen der Windschutzscheibe trägt, **dadurch gekennzeichnet**, daß eines der Module als Träger für mindestens einen Seitenrückspiegel (52) dient.

2. Einrichtung nach Anspruch 1, **dadurch gekennzeichnet,** daß der Seitenrückspiegel (52) fest ist.

3. Einrichtung nach einem der Ansprüche 1 oder 2, **dadurch gekennzeichnet,** daß der Seitenrückspiegel (52) einstückig mit dem Modul (15, 20) ausgeführt ist.

4. Einrichtung nach Anspruch 1, **dadurch gekennzeichnet,** daß der Seitenrückspiegel (52) am Modul (18, 20) angelenkt ist.

5. Einrichtung nach Anspruch 4, **dadurch gekennzeichnet,** daß der Seitenrückspiegel (52) am Modul (18, 20) einklappbar ist.
